# EUROPEAN PATENT APPLICATION

(11) **EP 4 664 325 A1**
(43) Date of publication of application: **17.12.2025**
(21) Application number: 24855116.0
(22) Date of filing: 26.04.2024
(51) Int. Cl.: G06F 16/9532

(54) **METHOD AND APPARATUS FOR EXPANDING CONTENT, DEVICE, MEDIUM, AND PROGRAM PRODUCT**

(71) Applicant: Lemon Inc., Grand Cayman, KY1-1205 (KY); BEIJING YOUZHUJU NETWORK TECHNOLOGY CO. LTD., Beijing 101299 (CN)
(72) Inventor: SUN, Yu, Los Angeles, California 90066 (US); XIONG, Hongyu, Los Angeles, California 90066 (US); LI, Pengyu, Los Angeles, California 90066 (US)
(74) Representative: Marks & Clerk LLP
(86) International application number: PCT/CN2024/089974
(87) International publication number: WO 2025/222474

(57) **Abstract**

Embodiments of the present disclosure relate to a method and an apparatus for augmenting content, a device, a medium, and a program product. The method includes determining, from a search term set, a group of second search terms associated with a first search term, where a number of pieces of original content associated with the first search term is less than a predetermined number threshold. The method further includes determining first target content associated with the first search term based on a group of pieces of second target content associated with the second search term, where the first target content is used to augment the content associated with the first search term. With this method, content associated with one search term and used for recall can be augmented by using another search term, so that more content can be recalled when the search term is searched for. Therefore, the effect of recommending content for search terms and the user experience can be improved.

## Description

### FIELD

Embodiments of the present disclosure generally relate to the field of data processing technologies, and in particular, to a method and an apparatus for augmenting content, a device, a medium, and a program product.

### BACKGROUND

With the popularization of the Internet and people's increasing dependence on the Internet, there is more and more data on the Internet, which gradually forms massive data resources, making it more and more important to process and classify the data. With the continuous increase of data on the Internet, various types of search recommendation systems have begun to be applied. A search recommendation system can recommend content to a user based on a search term selected or entered by the user, so that the user can quickly obtain required content from a large amount of data.

Currently, search recommendation systems usually use a funnel structure that includes a three-stage structure: recall, pre-ranking, and ranking. Recall refers to selecting as many results as possible that are related to a search term from a database containing a large amount of information and data. Pre-ranking is to perform preliminary selection and sorting on the results obtained through the recall. Ranking is to perform precise selection and sorting on the pre-ranking results to select a small number of optimal results.

### SUMMARY

Embodiments of the present disclosure provide a method and an apparatus for augmenting content, a device, a medium, and a program product.

According to a first aspect of the present disclosure, a method for augmenting content is provided. The method includes determining, from a search term set, a group of second search terms associated with a first search term, where a number of pieces of original content associated with the first search term is less than a predetermined number threshold. The method further includes determining first target content associated with the first search term based on a group of pieces of second target content associated with the second search term, where the first target content is used to augment the content associated with the first search term.

According to a second aspect of the present disclosure, an apparatus for augmenting content is provided. The apparatus includes: an association module configured to determine, from a search term set, a group of search terms associated with a first search term, where a number of pieces of original content associated with the first search term is less than a predetermined number threshold; and an augmentation module configured to determine first target content associated with the first search term based on a group of pieces of target content associated with the group of search terms, where the first target content is used to augment the content associated with the first search term.

According to a third aspect of the present disclosure, an electronic device is provided. The electronic device includes: at least one processor; and a storage apparatus, configured to store at least one program that, when executed by the at least one processor, causes the at least one processor to implement the method according to the first aspect of the present disclosure.

According to a fourth aspect of the present disclosure, a computer-readable storage medium is provided. The computer-readable storage medium has stored therein a computer program that, when executed by a processor, causes the method according to the first aspect of the present disclosure to be implemented.

According to a fifth aspect of the present disclosure, a computer program product is provided. The computer program product is tangibly stored on a computer-readable medium and includes computer-executable instructions that, when executed, cause a computer to perform the method according to the first aspect of the present disclosure.

It should be understood that the content described in this section is neither intended to limit key or essential features of the embodiments of the present disclosure, nor is it intended to limit the scope of the present disclosure. Other features of the present disclosure will be readily understood from the following description.

### BRIEF DESCRIPTION OF THE DRAWINGS

The above and other objectives, features, and advantages of the present disclosure will be more apparent from the more detailed description of exemplary embodiments of the present disclosure with reference to the accompanying drawings, in which like reference numerals generally represent like components in the exemplary embodiments of the present disclosure.
FIG. 1 is a schematic diagram of an example environment in which a method according to embodiments of the present disclosure may be implemented;
FIG. 2 is a schematic diagram of a scenario in which content is recommended based on a search term according to some embodiments of the present disclosure;
FIG. 3 is a schematic diagram of a method for augmenting content according to some embodiments of the present disclosure;
FIG. 4 is a schematic diagram of a method for determining a second search term associated with a first search term according to some embodiments of the present disclosure;
FIG. 5 is a schematic diagram of a method for determining first target content according to some embodiments of the present disclosure;
FIG. 6 is a schematic diagram of a method for augmenting content according to some embodiments of the present disclosure;
FIG. 7 is a schematic block diagram of an apparatus for augmenting content according to some embodiments of the present disclosure; and
FIG. 8 is a schematic block diagram of an example device suitable for implementing the embodiments of the present disclosure.

Throughout the figures, like or corresponding reference numerals indicate like or corresponding parts.

### DETAILED DESCRIPTION OF EMBODIMENTS

It can be understood that the data involved in the technical solutions (including, but not limited to, the data itself and the access to or use of the data) shall comply with the requirements of corresponding laws, regulations, and relevant provisions. For example, in response to reception of an active request from a user, prompt information is sent to the user to clearly inform the user that a requested operation will require access to and use of personal information of the user. In this way, the user can independently choose, based on the prompt information, whether to provide the personal information to software or hardware (such as an electronic device, an application, a server, or a storage medium) that performs operations in the technical solutions of the present disclosure. User interaction operations or interactions between the user and content, as well as data related to user operations (including, but not limited to, data used for analysis, stored data, displayed data, etc.), to which the present disclosure relates, are recorded, collected, or stored with authorization of the user or with full authorization of the parties, and collection, use, and processing of the relevant data is subject to the relevant laws, regulations, and standards of the relevant countries; and a corresponding operation portal is provided for the user to choose to authorize or reject. In the technical solutions of the embodiments of the present disclosure, the collection, storage, use, processing, transmission, provision, disclosure and other processing of user-related information involved comply with the provisions of relevant laws and regulations, and do not violate public order and good customs.

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

In the description of the embodiments of the present disclosure, the term "include" and similar terms should be understood as open-ended inclusion, that is, "including but not limited to". The term "based on" should be understood as "at least partially based on". The term "an embodiment" or "the embodiment" should be understood as "at least one embodiment". The terms "first", "second", and the like may refer to different objects or the same object. Other explicit and implicit definitions may be included below.

As described above, in a recall stage of a search recommendation process, a search recommendation system needs to select content associated with a search term from a large number of pieces of content of various information sources, and subsequent pre-ranking and ranking are performed based on the content obtained through the recall. In some cases, for some search terms entered by a user, a small number of pieces of content is obtained through the recall. Consequently, an excessively small number of pieces of content to be recommended to the user is finally obtained after the pre-ranking and ranking, which reduces the user experience.

To solve at least the above and other potential problems, the embodiments of the present disclosure provide a method for augmenting content. In the method, for a first search term with a number of pieces of recalled content less than a predetermined number threshold, a group of second search terms associated with the first search term may be determined from a search term set, and first target content associated with the first search term may be determined based on a group of pieces of second target content associated with the second search term.

With this method, for a search term with less recalled content, recalled content for another search term associated with the search term can be combined into the recalled content for the search term, so that a recall result of the search term can be augmented. Therefore, in the recall of the search recommendation system, original recall results of search terms with less recalled content can be augmented, so that enough results can be obtained through the recall for these search terms, thereby improving the recommendation effect and the user experience.

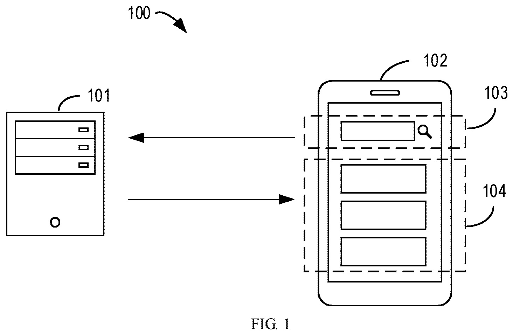

The embodiments of the present disclosure are described in further detail below with reference to the accompanying drawings. FIG. 1 is a schematic diagram of an example environment 100 in which a method according to the embodiments of the present disclosure may be implemented. As shown in FIG. 1, the environment 100 may include a recommendation device 101 and a user device 102. The recommendation device 101 may include, but is not limited to, a server, a minicomputer, a mainframe computer, a personal computer, a multi-processor system, a handheld or laptop device, a mobile device (for example, a mobile phone, a personal digital assistant (PDA), or a media player). The recommendation device 101 may obtain, from the user device 102, a search term entered by a user, and may also generate, based on the search term, content to be recommended to the user, and send the content to the user device 102.

The user device 102 may be any device capable of receiving entry information, and may be a mobile phone, a tablet computer (pad), a notebook computer, a palmtop computer, a smart TV, a PDA, a smart printer, a smart home appliance, a vehicle-mounted terminal, a wearable device (a smart watch, a smart band, smart glasses, etc.), a virtual reality (VR) device, an augmented reality (AR) device, etc. This is not limited in this embodiment of this application. The user device 102 may receive a search term entered by the user and send the search term to the recommendation device 101. The user device 102 may also receive content corresponding to the search term from the recommendation device 101 and display the content to the user.

As an example, the user device 102 may have a display interface, which may include a search term entry box 103 and a content display area 104. The user device 102 may receive the search term entered by the user through the search term entry box 103, and may display content recommended to the user in the content display area 104. In this embodiment of the present disclosure, the content recommended to the user may include, but is not limited to, text, audio, video, etc.

In some embodiments, the recommendation device 101 may determine content associated with the search term from a large number of pieces of content through recall based on the search term obtained from the user device 102, and then determine, through pre-ranking and ranking, content to be recommended to the user from the recalled content. In some embodiments, the recommendation device 101 may combine the recalled content for one search term into recalled content for another search term.

In some embodiments, the recommendation device 101 may store locally content associated with search terms. In some embodiments, the recommendation device 101 may combine the locally stored content associated with one search term into content associated with another search term. It should be understood that the environment 100 is only an example in this embodiment of the present disclosure and cannot be a limitation on the present disclosure. In some embodiments, the recommendation device 101 and the user device 102 may be a same device, that is, the user device 102 may implement functions of the recommendation device 101.

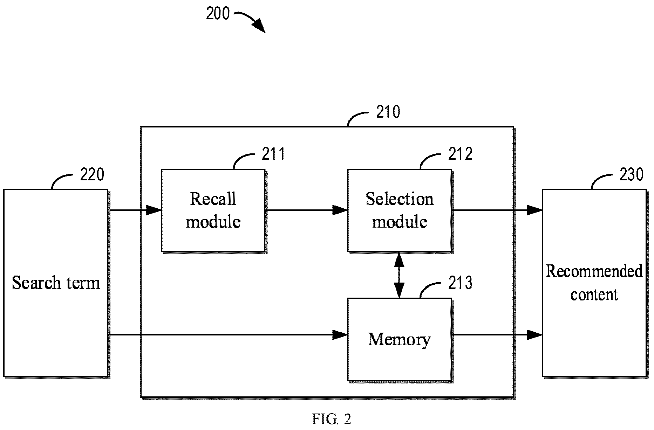

FIG. 2 is a schematic diagram of a scenario 200 in which content is recommended based on a search term according to some embodiments of the present disclosure. Referring to FIG. 2, the scenario 200 includes a recommendation apparatus 210. The recommendation apparatus 210 may be, for example, the recommendation device 101 in the environment 100. The recommendation apparatus 210 may obtain a search term 220 and generate recommended content 230 corresponding to the search term 220. The recommendation apparatus 210 may include a recall module 211, a selection module 212, and a memory 213. The recall module 2111 may determine a plurality of pieces of content related to the search term 220 from all content in a cloud or local memory based on the search term 220. The selection module 212 may perform coarse selection and fine selection on the content determined by the recall module 211, to finally determine the recommended content 230.

In some embodiments, the recall module 211 may determine thousands pieces of content from millions of pieces of content by using a predefined natural language processing (NLP) model; and the selection module 212 may determine correlations between the content determined by the recall module 211 and the search term 220, and determine content with a correlation greater than a predefined correlation threshold or a predefined number of pieces of content with the highest correlation as the recommended content 230.

In some embodiments, the recall module 211 may combine the recalled content associated with one search term into the recalled content associated with another search term, and use the combined content as a final recall result for another search term. In some embodiments, the recommendation apparatus 210 may store, in the memory 213 in association with each other, the recommended content 230 determined by the selection module 212 and the search term 220, so that when the search term 220 is obtained next time, the recommendation apparatus 210 may perform nearline recall, that is, directly match the obtained search term with the search term stored in the memory 213, to determine the recommended content 230. In some embodiments, after obtaining the search term 220, the recommendation apparatus 210 may match the search term with search terms stored in the memory 213 to determine a plurality of pieces of candidate content, and the selection module 212 may further perform selection on the plurality of pieces of determined candidate content to determine new recommended content.

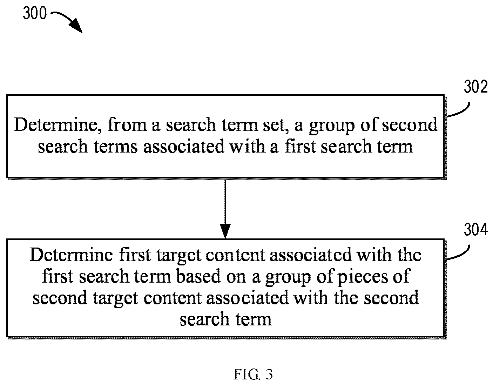

The schematic diagrams of an example environment and a scenario in which the method of the embodiments of the present disclosure may be implemented have been described above with reference to FIG. 1 and FIG. 2. A method for augmenting content according to the present disclosure is described below with reference to FIG. 3 to FIG. 6. FIG. 3 is a schematic diagram of a method for augmenting content according to some embodiments of the present disclosure. The method shown in FIG. 3 may be performed on the recommendation device 101 shown in FIG. 1, the recommendation apparatus 200 shown in FIG. 2, or any other suitable device. The method 300 according to the embodiments of the present disclosure is schematically described below by using an example in which the recommendation apparatus is an execution body. Referring to FIG. 3, the method 300 may include a block 302 and a block 304.

At block 302, the recommendation apparatus determines, from a search term set, a group of second search terms associated with a first search term. A number of pieces of original content associated with the first search term is less than a predetermined number threshold. In the embodiments of the present disclosure, the search term (including the first search term and the search term in the search term set) may be a text or tag entered by the user for searching for content of interest to the user. In some embodiments, the search term may be a tag that is obtained through classification based on the content entered by the user or through identification by using an algorithm model.

The search term set may include one or more search terms, and the first search term may also include one or more search terms. Both the first search term and the search term in the search term set may be associated with one or more contents. In some embodiments, the content associated with the search term may be obtained by the recommendation apparatus through the recall process. In some embodiments, the content associated with the search term may be determined when the search term is previously searched for, and the search terms and content may be stored in association with each other in the memory of the recommendation apparatus, for example, in the following format:
{queryl: [doc1, doc2, doc3...]}; and
{query2: [doc2, doc4, doc5...]},
where "doc1", "doc2", and "doc3" may be content associated with the search term "queryl "; and "doc2", "doc4", and "doc5" may be content associated with the search term "query2". In some embodiments, the search term set, the first search term, and the content respectively associated with the search term set and the first search term may be obtained by the recommendation apparatus from other devices, for example, from one or more user devices. In some embodiments, a number of pieces of content associated with the search terms in the search term set is greater than or equal to a predetermined number threshold. In some embodiments, the number of pieces of content associated with the first search term may be zero, that is, the first search term may have no associated content.

In some embodiments, the recommendation apparatus may determine a group of second search terms from the search term set based on similarities between the first search term and the search terms in the search term set. In some embodiments, the recommendation apparatus may determine a group of second search terms from the search term set based on a predefined classification model. The group of second search terms may include one or more search terms.

At block 304, the recommendation apparatus determines first target content associated with the first search term based on a group of pieces of second target content associated with the second search term. The first target content is used to augment the content associated with the first search term. As described at block 302 above, the second search term is a search term in the search term set, and the second search term is associated with one or more pieces of content, which is called the second target content for ease of description. The recommendation apparatus may determine the first target content from the second target content as new content associated with the first search term. That is, the recommendation apparatus may supplement the content associated with the first search term with the content associated with the second search term.

For example, the second search term associated with the first search term "query1" may be "query2", the second target content associated with the second search term may be "doc2", "doc4", and "doc5", and the recommendation apparatus may determine the first target content "doc2" and "doc5" from the second target content. In some embodiments, the recommendation apparatus may determine all content associated with the second search term as the first target content. In some embodiments, the recommendation apparatus may determine the first target content based on a similarity between the second target content and the first search term. In some embodiments, the recommendation apparatus may filter the second target content based on a predefined filtering rule, and determine the filtered second target content as the first target content.

With the method 300 above, the recommendation apparatus can augment the content associated with the first search term by using the second search term associated with the first search term, so that the first search term originally associated with less original content is associated with more content. In this way, even if there are fewer recall results of the first search term in the search recommendation process, the recall results can be augmented by using the second search term, thereby increasing the final number of pieces of content to be recommended to the user. In this way, the user experience can be improved.

In some embodiments, the recommendation apparatus may store the first target content and the first search term in association with each other. The recommendation apparatus may store, for example, the first target content and the first search term in association with each other in a local memory. For example, the first target content may include "doc2" and "doc5", the first search term may be "query1", and the recommendation apparatus may store the first target content and the first search term in association with each other as {query1:[doc2, doc5]}. In some embodiments, the first search term has associated original content, for example, "doc1", and the recommendation apparatus may store the original content, the first target content, and the first search term in association with each other as {query1:[doc1, doc2, doc5]}. Therefore, when the recommendation apparatus receives the search term "query1" next time, nearline recall may be performed, to directly determine the content associated with the search term from the data stored in the local memory. Furthermore, because the content stored in the local cache and associated with the search term is augmented, more content associated with the search term can be determined through the nearline recall, thereby improving the recommendation effect and improving the user experience.

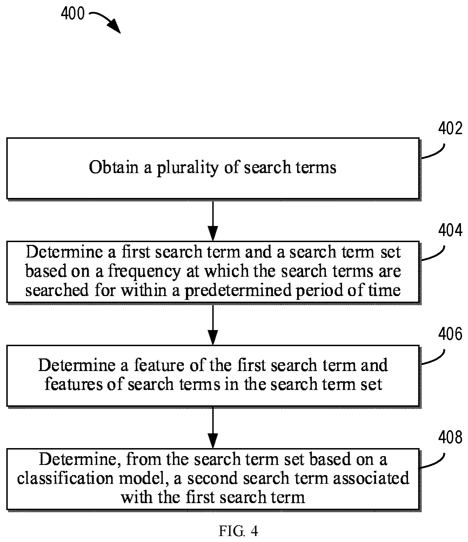

In some embodiments, at block 302 above, the recommendation apparatus may divide the plurality of search terms into the first search term and the search terms in the search term set, and determine, from the search term set on this basis, the second search term associated with the first search term. For example, FIG. 4 is a schematic flowchart of a method 400 for determining a second search term associated with a first search term according to some embodiments of the present disclosure. Referring to FIG. 4, the method 400 may include a block 402 to a block 408.

At block 402, the recommendation apparatus obtains a plurality of search terms. The plurality of search terms may be determined based on historical search records of one or more users, and the recommendation apparatus may obtain search records of a user from one or more user devices, to determine one or more search terms. In some embodiments, the recommendation apparatus may obtain a plurality of search terms from other devices configured in a cloud to provide a search recommendation service to the user.

At block 404, the recommendation apparatus determines a first search term and a search term set based on a frequency at which the search terms are searched for within a predetermined period of time. The predetermined period of time may be, for example, one day or one week. The frequency at which the search terms are searched for may be a frequency at which the search terms are searched for by all users on the Internet. In some embodiments, the recommendation apparatus is configured to provide the search recommendation service for a specific user, and the frequency at which the search terms are searched for may also be a frequency at which the search terms are searched for by the specific user.

At block 406, the recommendation apparatus determines a feature of the first search term and features of the search terms in the search term set. For example, the recommendation apparatus may input the first search term and the search terms in the search term set into a predefined recall model, to obtain the feature corresponding to the first search term and the features corresponding to the search terms in the search term set based on the recall model. In some embodiments, the feature may be, for example, embedding. In some embodiments, the recommendation apparatus may determine the feature corresponding to the first search term and the features corresponding to the search terms in the search term set based on other types of embedding models.

At block 408, the recommendation apparatus may determine, from the search term set based on a predefined classification model, a second search term associated with the first search term. The classification model may include, but is not limited to, a k-nearest neighbor (KNN) algorithm model, a self-attention model, a self-attention bidirectional encoder representations from transformers (BERT) model, etc. The recommendation apparatus inputs the feature of the first search term and the features of the search terms in the search term set into the classification model, to obtain the second search term associated with the first search term. With this method, if the first search term includes a plurality of search terms, the second search term associated with each of the plurality of search terms can also be quickly determined.

It should be understood that the method 400 shown in FIG. 4 is only an example in the embodiments of the present disclosure and cannot be a limitation on the embodiments of the present disclosure. In some embodiments of the present disclosure, the recommendation apparatus may also distinguish the first search term from the search term set in other methods, or may determine a second search term set in other methods. For example, in some embodiments, at block 404, the recommendation apparatus may divide the plurality of search terms into the first search term and the search terms in the search term set based on the number of pieces of content associated with the search terms. For example, the search term with a number of pieces of associated content less than a predetermined number threshold may be determined as the first search term, and the search term with a number of pieces of associated content greater than or equal to the predetermined number threshold may be determined as the search term in the search term set.

In some embodiments, at block 408, the recommendation apparatus may determine similarities between the first search term and the search terms in the search term set based on the feature of the first search term and the features of the search terms in the search term set, for example, by using a two-tower model. For a specific first search term, the recommendation apparatus may determine similarities between all the search terms in the search term set and the first search term, and sort the search terms in the search term set in a descending order of the similarities; and the recommendation apparatus may determine the second search term based on the sorting. For example, the recommendation apparatus may determine the search terms sorted in the top 15 as second search terms associated with the first search term.

In some embodiments, at block 302 above, the second search term associated with the first search term determined by the recommendation apparatus may include a plurality of search terms, and these search terms may each be associated with a plurality of pieces of second target content. The recommendation apparatus may combine these second target content and determine the first target content on this basis. In some embodiments, the recommendation apparatus may perform filtering and selection on the second target content. For example, the recommendation apparatus may filter out content that is the same as the original content from the second target content. For another example, the recommendation apparatus may determine a similarity between the second target content and the first search term, and select the first target content from the second target content based on the similarity.

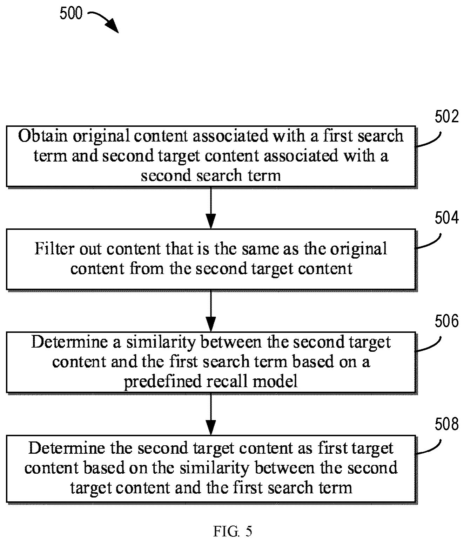

For example, FIG. 5 is a schematic flowchart of a method 500 for determining first target content according to some embodiments of the present disclosure. Referring to FIG. 5, the method 500 may include a block 502 to a block 508. At block 502, the recommendation apparatus may obtain original content associated with a first search term and second target content associated with a second search term. In some embodiments, the original content associated with the first search term may be determined by the recommendation apparatus from a large number of pieces of content of a plurality of data sources through a recall model, and the second target content associated with the second search term may also be determined by the recommendation apparatus from a large number of pieces of content by using the recall model.

In some embodiments, the original content associated with the first search term may be determined by using the recall model and the selection model during a previous search recommendation for the first search term and stored in a memory of the recommendation apparatus. The second search term may be determined at block 302 above or by using the method 400 above, and the second target content associated with the second search term may be determined by the recommendation apparatus by using the recall model and the selection model during a previous search recommendation for the second search term and stored in the memory of the recommendation apparatus. The recommendation apparatus may obtain the original content and the second target content from the memory. In some embodiments, the original content and the second target content may also be obtained by the recommendation apparatus from other recommendation apparatuses or systems.

At block 504, the recommendation apparatus filters out content that is the same as the original content from the second target content. Because the memory of the recommendation apparatus has stored the original content associated with the first search term, or the recommendation apparatus has determined or obtained the original content associated with the first search term, the content that is the same as the original content may be removed from the second target content, so that only content that is different from the original content is processed, which can avoid duplicate content in the finally determined content associated with the first search term. In some embodiments, the second target content is combined by content associated with a plurality of second search terms and includes duplicate content, and the recommendation apparatus may remove the duplicate content from the second target content.

At block 506, the recommendation apparatus may determine a similarity between the second target content and the first search term based on a predefined recall model. The recommendation apparatus may input the second target content and the first search term into the predefined recall model, and the recall model may determine a feature of the second target content and a feature of the first search term, and calculate a cosine similarity between the feature of the second target content and the feature of the first search term.

At block 508, the recommendation apparatus determines the second target content as the first target content based on the similarity between the second target content and the first search term. One first search term may correspond to a plurality of pieces of second target content, and the recommendation apparatus may sort the plurality of pieces of second target content in a descending order of similarities between the second target content and the first search term. In some embodiments, the recommendation apparatus may determine the second target content having a cosine similarity greater than a predetermined similarity threshold as the first target content. In some embodiments, the recommendation apparatus may determine a predefined number of pieces of second target content sorted first as the first target content.

With the method 500, the duplicate content in the second target content can be removed and selection can be further performed on the second target content based on the recall model, so that there is a better association between the determined first target content and the first search term, to provide a more matching result during subsequent selection or nearline recall, thereby improving the recommendation effect.

In some embodiments, the recommendation apparatus determines a similarity between the second target content and the first search term at block 506 in the method 500, so that the first target content determined from the second target content at block 508 also has a similarity with the first search term. The recommendation apparatus may store the first target content, the first search term, and the similarity between the first target content and the first search term in association with each other. Subsequently, if receiving a search request of a user for the first search term, the recommendation apparatus may provide the first target content to the user in a descending order of similarities directly based on the first target content stored in the memory. Therefore, the efficiency of recommending content to the user can be improved.

In some embodiments, the recommendation apparatus may store the first target content and the first search term in association with each other after determining the first target content by using the method 300. Subsequently, if receiving the search request for the first search term, the recommendation apparatus may obtain the first target content from the memory and input the first target content into a predefined ranking model, and perform further precise selection on the first target content, to determine content to be recommended that better matches the first search term.

In some embodiments, the recommendation apparatus may use the stored first target content and the first search term for subsequent search recommendation within a predetermined period of time. For example, the predetermined period of time may be one day. In this case, after the recommendation apparatus determines and stores the first target content associated with the first search term, if the recommendation apparatus receives the search request of the user for the first search term within one day, the recommendation apparatus may recommend content to the user directly based on the content stored in the memory and associated with the first search term. After one day, the recommendation apparatus may perform the method 300 again, or determine the content to be recommended to the user from a plurality of pieces of content on the Internet or in a cloud memory by using the predefined recall model and the selection model. Therefore, even if the content associated with the first search term and stored in the memory of the recommendation apparatus cannot be adapted to the user's needs due to an excessive time, the recommendation apparatus can adjust the content in time, to recommend content that meets the user's needs to the user.

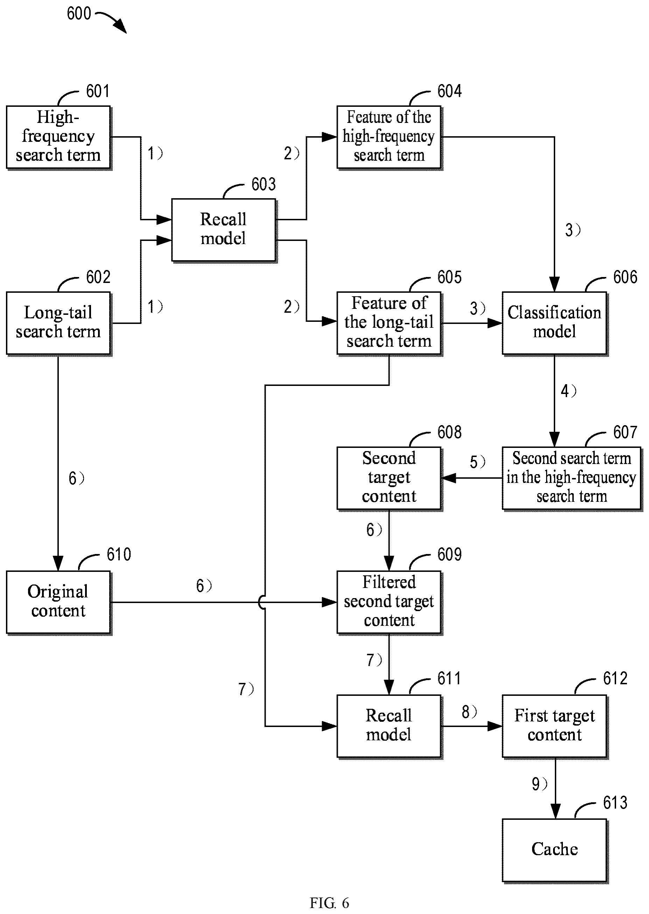

FIG. 6 is a schematic diagram of a method 600 for augmenting content according to some embodiments of the present disclosure. The method shown in FIG. 6 may be performed by an apparatus for augmenting content. The apparatus may be, for example, the recommendation device 101 in the scenario 100 or the recommendation apparatus 210 in the scenario 200. In the method 600, content associated with a long-tail search term may be augmented based on a high-frequency search term. The method 600 is schematically described below by using an example in which the recommendation apparatus is an execution body. Referring to FIG. 6, the method 600 may include steps 1) to 9).

In step 1), the recommendation apparatus inputs a high-frequency search term 601 and a long-tail search term 602 into a recall model 603. The high-frequency search term may be a search term searched for at a frequency greater than or equal to a predetermined search threshold within a predetermined period of time, and the long-tail search term may be a search term searched for at a frequency less than the predetermined search threshold within the predetermined period of time. In step 2), the recommendation apparatus obtains a feature 604 of the high-frequency search term and a feature 605 of the long-tail search term by using the recall model 603. In step 3), the recommendation apparatus inputs the feature 605 of the long-tail search term and the feature 604 of the high-frequency search term into a classification model 606. In step 4), the classification model 606 determines a second search term 607 from the high-frequency search term. In step 5), the recommendation apparatus determines second target content 608 associated with the second search term 607. In step 6), the recommendation apparatus determines original content 610 associated with the long-tail search term 602 and removes content in the second target content 608 that is the same as that in the original content 610, to obtain filtered second target content. In step 7), the recommendation apparatus inputs the selected second target content 609 into a recall model 611, and inputs the feature 605 of the long-tail search term into the recall model 611. The recall model 611 and the recall model 603 may be the same or different models.

In step 8), the recall model 611 generates a feature of the selected second target content 609, and determines a similarity between the selected second target content 609 and the long-tail search term 602 based on the feature 605 of the long-tail search term, to determine the first target content 612 from the selected second target content 609 based on the similarity. In step 9), the recommendation apparatus stores the first target content 612, the original content 610, and the long-tail search term 602 in association with each other in a locally configured cache device. In this way, the recommendation apparatus augments the content associated with the long-tail search term, so that more content associated with the long-tail search term can be provided during subsequent nearline recall. Therefore, the search recommendation effect can be improved.

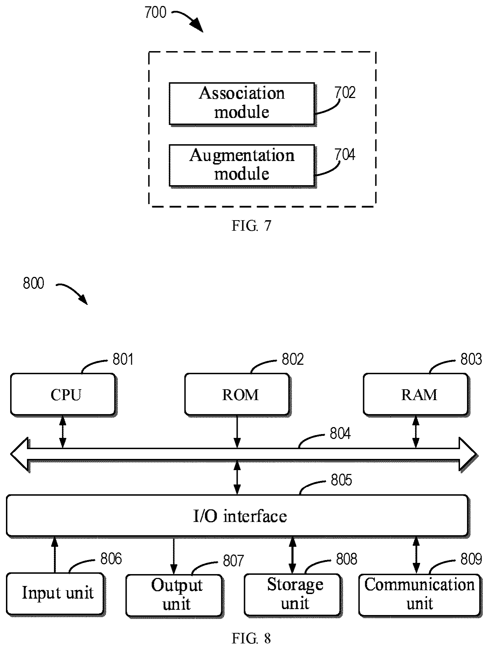

The method according to the embodiments of the present disclosure has been described above with reference to FIG. 3 to FIG. 6. An apparatus according to the embodiments of the present disclosure is described below with reference to FIG. 7 and FIG. 8. FIG. 7 is a schematic diagram of an apparatus 700 for augmenting content according to some embodiments of the present disclosure. For example, as shown in FIG. 7, the apparatus 700 may include: an association module 702, configured to determine, from a search term set, a group of search terms associated with a first search term, where a number of pieces of original content associated with the first search term is less than a predetermined number threshold; and an augmentation module 704, configured to determine first target content associated with the first search term based on a group of pieces of target content associated with the group of search terms, where the first target content is used to augment the content associated with the first search term.

In some embodiments, the first search term is a search term searched for at a frequency less than a predetermined search threshold within a predetermined period of time, and a search term in the search term set is a search term searched for at a frequency greater than or equal to the predetermined search threshold within the predetermined period of time.

In some embodiments, the association module 702 includes a classification unit configured to determine, from the search term set based on a predefined classification model, a plurality of groups of second search terms respectively associated with a plurality of first search terms.

In some embodiments, the classification unit includes: a first embedding determination unit configured to determine first embedding of each of the plurality of first search terms; a second embedding determination unit configured to determine second embedding of each search term in the search term set; and a first association unit configured to determine the plurality of groups of second search terms respectively associated with the plurality of first search terms based on the first embedding, the second embedding, and the predefined classification model.

In some embodiments, the association module 702 includes: a first sorting unit configured to determine an order of the search terms in the search term set based on similarities between the first search term and the search terms in the search term set; and a second association unit configured to determine a second search term based on the order of the search terms in the search term set.

In some embodiments, the augmentation module 704 includes: an obtaining unit configured to obtain second target content and original content; a filtering unit configured to filter out content that is the same as the original content from the second target content; and a first determination unit configured to determine the first target content based on the filtered second target content.

In some embodiments, the first determination unit includes: a similarity determination unit configured to determine a similarity between the filtered second target content and the first search term based on a predefined recall model; and a second determination unit configured to determine the first target content based on the similarity between the filtered second target content and the first search term.

In some embodiments, the apparatus 700 further includes: a first storage module configured to store the first target content, the first search term, and the similarity between the first search term and the first target content in association with each other; and a first recommendation module configured to determine, in response to receiving a search request of a user for the first search term, content to be recommended to the user based on the similarity between the first target content and the first search term.

In some embodiments, the apparatus 700 further includes: a second storage module configured to store the first target content and the first search term in association with each other; a second sorting module configured to determine an order of the first target content and the original content based on the first target content, the original content, and a predefined ranking model in response to receiving a search request of a user for the first search term; and a second recommendation module configured to determine content to be recommended to the user based on the order of the first target content and the original content.

FIG. 8 is a schematic block diagram of an example device 800 that may be used to implement the embodiments of the present disclosure. The recommendation apparatus 101 in FIG. 1 or the recommendation apparatus 210 in FIG. 2 can be implemented by using the device 800. As shown in FIG. 8, the device 800 includes a central processing unit (CPU) 801 that may perform a variety of appropriate actions and processing according to computer program instructions stored in a read-only memory (ROM) 802 or computer program instructions loaded from a storage unit 808 into a random access memory (RAM) 803. The RAM 803 may further store various programs and data required for the operation of the device 800. The CPU 801, the ROM 802, and the RAM 803 are connected to one another through a bus 804. An input/output (I/O) interface 805 is also connected to the bus 804.

A plurality of components in the device 800 are connected to the I/O interface 805, including: an input unit 806, for example, a keyboard or a mouse; an output unit 807, for example, various types of displays or speakers; a storage unit 808, for example, a magnetic disk or an optical disc; and a communication unit 809, for example, a network interface card, a modem, or a wireless communication transceiver. The communication unit 809 allows the device 800 to exchange information/data with other devices over a computer network, for example, the Internet and/or various telecommunication networks.

The processes and processing described above, for example, the methods 300, 400, 500, and/or 600, may be performed by the central processing unit 801. For example, in some embodiments, the methods 300, 400, 500, and/or 600 may be implemented as a computer software program tangibly contained in a machine-readable medium such as the storage unit 808. In some embodiments, some or all of the computer programs may be loaded into and/or installed onto the device 800 through the ROM 802 and/or the communication unit 809. When the computer program is loaded into the RAM 803 and executed by the CPU 801, one or more actions of the methods 300, 400, 500, and/or 600 described above may be performed.

The present disclosure may relate to a method, an apparatus, a system, and/or a computer program product. The computer program product may include a computer-readable storage medium on which computer-readable program instructions for performing various aspects of the present disclosure are carried.

The computer-readable storage medium may be a tangible device that can retain and store instructions used by an instruction execution device. The computer-readable storage medium may be, for example, but is not limited to, an electric storage device, a magnetic storage device, an optical storage device, an electromagnetic storage device, a semiconductor memory device, or any suitable combination thereof. More specific examples of the computer-readable storage medium (a non-exhaustive list) include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical coding device, a punched card or an in-groove raised structure on which instructions are, for example, stored, and any suitable combination thereof. The computer-readable storage medium used herein is not to be interpreted as a transient signal per se, such as a radio wave or another freely propagating electromagnetic wave, an electromagnetic wave propagating through a waveguide or another transmission medium (for example, an optical pulse through a fiber-optic cable), or an electrical signal transmitted over a wire.

The computer-readable program instructions described herein may be downloaded from a computer-readable storage medium to each computing/processing device, or downloaded to an external computer or an external storage device over a network, such as the Internet, a local area network, a wide area network, and/or a wireless network. The network may include copper transmission cables, fiber-optic transmission, wireless transmission, routers, firewalls, switches, gateway computers, and/or edge servers. A network adapter card or network interface in each computing/processing device receives computer-readable program instructions from the network and forwards the computer-readable program instructions for storage in the computer-readable storage medium in each computing/processing device.

The computer program instructions for performing the operations of the present disclosure may be assembly instructions, instruction set architecture (ISA) instructions, machine instructions, machine-related instructions, microcode, firmware instructions, state setting data, or source code or object code written in any combination of one or more programming languages, including object-oriented programming languages, such as Smalltalk and C++, as well as conventional procedural programming languages, such as "C" language or similar programming languages. The computer-readable program instructions may be completely executed on a computer of a user, partially executed on a computer of a user, executed as an independent software package, partially executed on a computer of a user and partially executed on a remote computer, or completely executed on a remote computer or server. In the circumstance involving the remote computer, the remote computer may be connected to a computer of a user over any type of network, including a local area network (LAN) or a wide area network (WAN), or may be connected to an external computer (for example, connected over the Internet using an Internet service provider). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, to implement the various aspects of the present disclosure.

Various aspects of the present disclosure have been described herein with reference to the flowchart and/or the block diagrams of the method, the apparatus (system), and the computer program product according to the embodiments of the present disclosure. It should be understood that each block of the flowchart and/or the block diagrams and a combination of blocks in the flowchart and/or the block diagrams may be implemented by computer-readable program instructions.

These computer-readable program instructions may be provided to a processing unit of a general-purpose computer, a special-purpose computer, or another programmable data processing apparatus to produce a machine, such that the instructions, when executed by the processing unit of the computer or the other programmable data processing apparatus, create an apparatus for implementing functions/actions specified in one or more blocks in the flowchart and/or the block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowchart and/or the block diagrams.

Alternatively, the computer-readable program instructions may be loaded onto a computer, another programmable data processing apparatus, or another device, such that a series of operation steps are performed on the computer, the other programmable data processing apparatus, or the other device to produce a computer-implemented process. Therefore, the instructions executed on the computer, the other programmable data processing apparatus, or the other device implement functions/actions specified in one or more blocks in the flowchart and/or the block diagrams.

The flowcharts and block diagrams in the accompanying drawings show the system architecture, function, and operation of possible implementations systems, methods, and computer program products according to various embodiments of the present disclosure. In this regard, each block in the flowcharts or the block diagrams may represent a part of a module, a program segment, or an instruction. The part of the module, the program segment, or the instruction includes one or more executable instructions for implementing a specified logical function. In some alternative implementations, functions marked in the blocks may occur in a sequence different from that marked in the accompanying drawings. For example, two consecutive blocks may actually be executed substantially in parallel, or may sometimes be executed in a reverse order, depending on a function involved. It should also be noted that each block in the block diagrams and/or the flowcharts, and a combination of the blocks in the block diagrams and/or the flowcharts may be implemented by a dedicated hardware-based system that executes specified functions or actions, or may be implemented by a combination of dedicated hardware and computer instructions.

Various embodiments of the present disclosure have been described above. The foregoing descriptions are exemplary, not exhaustive, and are not limited to the disclosed embodiments. Many modifications and variations are apparent to a person of ordinary skill in the art without departing from the scope and spirit of the described embodiments. Selection of terms used herein is intended to best explain principles of the embodiments, actual application, or technical improvements to technologies in the market, or to enable another person of ordinary skill in the art to understand the embodiments disclosed herein.

## Claims

1. A method for augmenting content, comprising:
determining, from a search term set, a group of second search terms associated with a first search term, a number of pieces of original content associated with the first search term being less than a predetermined number threshold; and
determining first target content associated with the first search term based on a group of pieces of second target content associated with the second search term, the first target content being used to augment the content associated with the first search term.

2. The method according to claim 1, the first search term is a search term searched for at a frequency less than a predetermined search threshold within a predetermined period of time, and a search term in the search term set is a search term searched for at a frequency greater than or equal to the predetermined search threshold within the predetermined period of time.

3. The method according to claim 1 or 2, the determining, from a search term set, a group of second search terms associated with a first search term comprises:
determining, from the search term set based on a predefined classification model, a plurality of groups of second search terms respectively associated with a plurality of first search terms.

4. The method according to claim 3, the determining, from the search term set based on a predefined classification model, a plurality of groups of second search terms respectively associated with a plurality of first search terms comprises:
determining first embedding of each of the plurality of first search terms;
determining second embedding of each search term in the search term set; and
determining the plurality of groups of second search terms respectively associated with the plurality of first search terms based on the first embedding, the second embedding, and the predefined classification model.

5. The method according to claim 1 or 2, the determining, from a search term set, a group of second search terms associated with a first search term comprises:
determining an order of search terms in the search term set based on similarities between the first search term and the search terms in the search term set; and
determining the second search terms based on the order of the search terms in the search term set.

6. The method according to claim 1 or 2, the determining first target content associated with the first search term based on a group of pieces of second target content associated with the second search term comprises:
obtaining the second target content and the original content;
filtering out content that is the same as the original content from the second target content; and
determining the first target content based on the filtered second target content.

7. The method according to claim 6, the determining the first target content based on the filtered second target content comprises:
determining a similarity between the filtered second target content and the first search term based on a predefined recall model; and
determining the first target content based on the similarity between the filtered second target content and the first search term.

8. The method according to claim 7, further comprising:
storing the first target content, the first search term, and the similarity between the first search term and the first target content in association with each other; and
determining, in response to receiving a search request of a user for the first search term, content to be recommended to the user based on the similarity between the first target content and the first search term.

9. The method according to claim 1, further comprising:
storing the first target content and the first search term in association with each other;
determining an order of the first target content and the original content based on the first target content, the original content, and a predefined ranking model in response to receiving a search request of a user for the first search term; and
determining content to be recommended to the user based on the order of the first target content and the original content.

10. An apparatus for augmenting content, by comprising:
an association module configured to determine, from a search term set, a group of search terms associated with a first search term, a number of pieces of original content associated with the first search term being less than a predetermined number threshold; and
an augmentation module configured to determine first target content associated with the first search term based on a group of pieces of target content associated with the group of search terms, the first target content being used to augment the content associated with the first search term.

11. An electronic device, comprising:
a processor; and
a memory coupled to the processor, the memory having stored therein instructions that, when executed by the processor, cause the electronic device to perform the method according to any one of claims 1 to 9.

12. A computer-readable storage medium having stored therein computer-executable instructions that, when executed by a processor, cause the method according to any one of claims 1 to 9 to be implemented.

13. A computer program product, the computer program product is tangibly stored on a non-volatile computer-readable medium and comprises computer-executable instructions that, when executed, cause a computer to perform the steps of the method according to any one of claims 1 to 9.
